# EUROPÄISCHE PATENTANMELDUNG

(11) **EP 0 861 010 A2**
(43) Veröffentlichungstag der Anmeldung: **26.08.1998**
(21) Anmeldenummer: 98440017.6
(22) Anmeldetag: 06.02.1998
(51) Int. Cl.: H04Q 7/34, H04Q 7/36

(54) **Verfahren zum Ermitteln der räumlichen Verteilung des Verkehrsaufkommens in einem Mobilfunknetz**

(30) Priorität: 14.02.1997 DE 19705903
(71) Anmelder: ALCATEL ALSTHOM COMPAGNIE GENERALE D'ELECTRICITE, 75008 Paris (FR)
(72) Erfinder: Collmann, Ralf, Dr., 70565 Stuttgart (DE)
(74) Vertreter: Knecht, Ulrich Karl, Dipl.-Ing.

(57) **Zusammenfassung**

Zum Ermitteln der räumlichen Verteilung des Verkehrsaufkommens innerhalb einer Funkzelle eines zellularen Mobilfunknetzes wird üblicherweise ein Testsender an einem Teststandort aufgestellt. Jede Mobilstation, die das Testsignal empfängt, mißt und berichtet den Empfangspegel zur Auswertung an einen Rechner, der den Teststandort prüft. Der Teststandort wird dann als für die Einrichtung einer neuen Funkfeststation geeignet befunden, wenn die Mehrheit der Mobilstationen das Testsignal stark genug empfängt.

Zur einfachen Ermittlung der räumlichen Verteilung wird vorgeschlagen, zunächst die Funkzelle (RC1) in mehrere Segmente (A1, A2, A3, ... ,D4) aufzuteilen, denen jeweils Sollwerte (z.B. Soll-Empfangspegel) zugeordnet sind, die mittels eines Funknetzplanungstools berechnet werden und aus denen die räumlichen Entfernungen des Segmentes (C2) zu mindestens zwei der Funkfeststationen (BS1, BS2) ableitbar sind. Danach werden für jede Mobilstation (MS) Meßwerte (z.B. Ist-Empfangspegel) ermittelt, die von den Längen der Funkstrecken abhängen. Durch Soll-lst-Vergleich wird dasjenige Segment (C2) markiert, in dem sich die Mobilstation (MS) momentan befindet. Für dieses Segment (C2) wird dann ein Zählerstand erhöht, der das Verkehrsaufkommen in diesem Segment angibt. Es wird kein Testsender benötigt.

## Beschreibung

Die Erfindung ist auf ein Verfahren zum Ermitteln der räumlichen Verteilung des Verkehrsaufkommens innerhalb einer Funkzelle eines zellularen Mobilfunknetzes sowie auf eine Auswerteeinrichtung, die das Verfahren ausführt, und auf ein damit ausgestattetes Mobilfunknetz gerichtet.

Aus der Produktinformation "Digital Cellular Traffic Hotspot Detector" von der Firma Motorola, Swindon, Großbritannien, ist ein solches Verfahren zur Ermittlung des Verkehrsaufkommens innerhalb einer Funkzelle eines zellularen Mobilfunknetzes, das nach dem GSM-Standard (GSM: Global System for Mobile Communications) ausgelegt ist, bekannt. In dem dort beschriebenen Verfahren "Hotspot Detection" wird ein Testsender in den Versorgungsbereich des Mobilfunknetzes an einem Teststandort aufgestellt, dann wird mittels des Testsenders ein Testsignal gesendet und anschließend wird das Testsignal von Mobilstationen empfangen, die sich in dem Versorgungsbereich des Mobilfunknetzes befinden. Eine jede der Mobilstation, die das Testsignal empfängt, mißt und berichtet den Empfangspegel dieses Testsignals an die aktuelle Funkfeststation ("base station currently serving the cell"). In einem mit dieser Funkfeststation verbundenen Rechner werden die von mehreren Mobilstationen berichteten Empfangspegel ausgewertet, um festzustellen, ob der Teststandort für die Einrichtung einer Funkfeststation geeignet ist. Wie dort beschrieben, wird der Teststandort dann als geeignet befunden, wenn die Mehrheit der Mobilstationen das Testsignal stärker empfängt als ein Rundspruchsignal, das die aktuelle Funkfeststation sendet. Demnach muß bei dem bekannten Verfahren ein Testsender verwendet und an einem Teststandort aufgestellt werden. Zudem muß der Testsender ein Testsignal senden, das für den Empfang durch die Mobilstationen geeignet ist.

Aufgabe der Erfindung ist es, das eingangs genannte Verfahren zu vereinfachen, sodaß kein Testsender benötigt wird. Außerdem soll eine Auswerteeinrichtung vorgeschlagen werden, mit Hilfe dessen das Verfahren einfach ausführbar ist, und es soll ein damit ausgestattetes Mobilfunknetz angegeben werden.

Gelöst wird die Aufgabe durch ein Verfahren mit Merkmalen nach Anspruch 1 sowie durch eine Auswerteeinrichtung und durch ein damit ausgestattetes Mobilfunknetz mit den Merkmalen nach den nebengeordneten Ansprüchen.

Demnach wird mittels der Auswerteeinrichung zunächst die zu untersuchende Funkzelle in mehrere Segmente aufgeteilt, wobei jedem Segment ein Soll-Datensatz zugeordnet wird, der mindestens zwei Sollwerte enthält, die für die Raumkoordinaten des Segments
Funkausbreitungsbedingungen auf Funkstrecken zu mindestens zwei der Funkfeststationen angeben und aus denen die räumlichen Entfernungen des Segmentes zu den mindestens zwei Funkfeststationen ableitbar sind. Danach werden für jede Mobilstation innerhalb der Funkzelle mindestens zwei Meßwerte ermittelt, die von den Längen der Funkstrecken zwischen der Mobilstation und den mindestens zwei Funkfeststationen abhängen. Anschließend wird aus den Meßwerten ein Ist-Datensatz gebildet und mit den Soll-Datensätzen verglichen und es wird dasjenige Segment angegeben, dessen Soll-Datensatz am besten mit dem Ist-Datensatz übereinstimmt. Für das angegebene Segment wird dann ein Zählerstand erhöht, der das Verkehrsaufkommen in diesem Segment angibt.

Vorteilhafte Ausgestaltungen der Erfindung sind den Unteransprüchen zu entnehmen.

Die Erfindung wird im weiteren anhand eines Ausführungsbeispiels und unter Zuhilfenahme folgendes Figuren näher beschrieben:
- Fig. 1: die schematisch den Aufbau eines Mobilfunknetzes und einen Ausschnitt daraus darstellt;
- Fig. 2: in der schematisch der Inhalt von Solldatensätzen, die mit einem Ist-Datensatz verglichen werden, dargestellt ist;
- Fig. 3: die ein Blockschaltbild eines Verfahrens zur Ermittlung der räumlichen Verteilung darstellt.

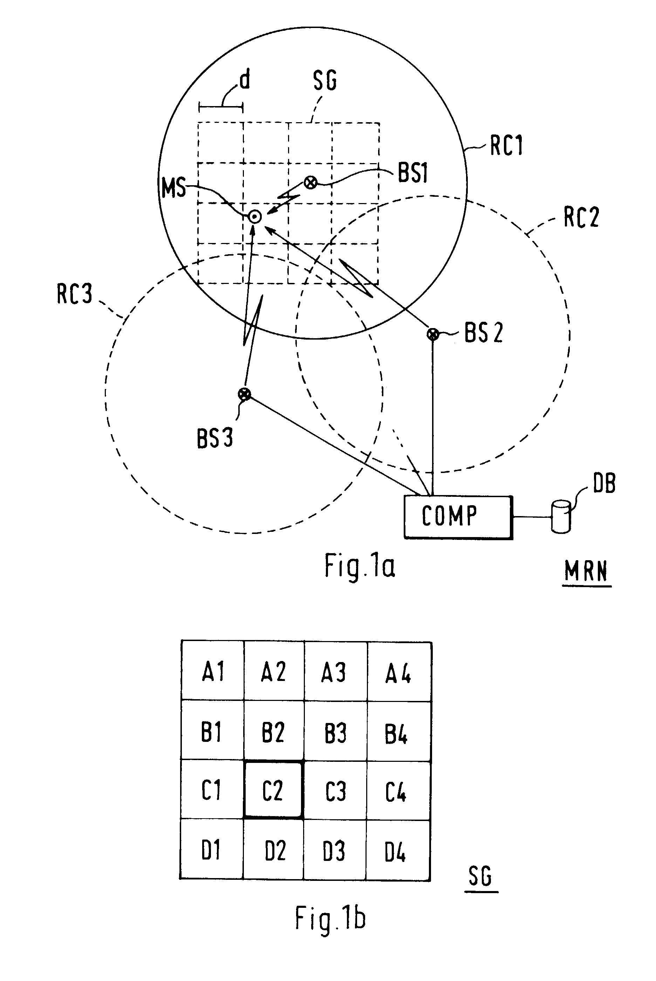

Fig. 1a zeigt schematisch den Aufbau eines zellularen Mobilfunknetzes MRN, das mehrere Funkzellen RC1 bis RC3 enthält, die jeweils von Funkfeststationen BS1 bis BS3 versorgt werden. Die Funkfeststationen sind mit einer im späteren noch beschriebenen Auswerteeinrichtung COMP verbunden, die wiederum mit einer Datenbank DB verbunden ist. Es soll nun die räumliche Verteilung des Verkehrsaufkommens innerhalb der Funkzelle RC1 ermittelt werden. In der Funkzelle RC1, die von der Funkfeststation BS1 versorgt wird, halten sich momentan mehrere Mobilstationen auf, von denen beispielhaft nur eine Mobilstation MS dargestellt ist. Um feststellen zu können, an welchen Orten innerhalb der Funkzelle RC1 sich wieviele der Mobilstationen aufhalten, wird die Funkzelle RC1 in mehrere Segmente aufgeteilt. In Fig. 1a ist beispielhaft eine Gruppe von Segmenten SG dargestellt, die aus 16 Planquadraten mit jeweils einer Kantenlänge von d = 20 m besteht. Demnach wird in diesem Beispiel die Funkzelle RC1, die üblicherweise etwa 15 bis 30 km Durchmesser hat, in kleine Planquadrate unterteilt, die lediglich eine Fläche von 20 m x 20 m abdecken. Die Gruppe der Planquadrate SG ist in Fig. 1 nur durch Strichpunkte angedeutet und deckt hier beispielhaft für die ganze Funkzelle RC1 nur einen Teilbereich ab. In Fig. 1b ist dargestellt, daß die Gruppe der Segmente SG aus folgenden Segmenten besteht: A1 bis A4, B1 bis B4, C1 bis C4 und D1 bis D4. In diesem Beispiel haben die Segmente quadratische Form haben, werden hier auch Planquadrate A1 bis D4 genannt. Es sind auch andere Formen denkbar, wie etwa die Wabenform.

Im folgenden wird wir nun das Planquadrat C2 näher betrachtet: Dem Planquadrat C2 ist, wie jedem Planquadrat ein Soll-Datensatz zugeordnet, der mindestens zwei Sollwerte enthält, die in der Datenbank DB gespeichert sind. Die Sollwerte werden hier mittels eines Rechners bestimmt, der ein Programm zur Funknetzplanung enthält. Solche Rechner sind dem Fachmann als sogenannte "Funknetzplanungstools" bekannt. Die verwendeten Programme berechnen die Funkausbreitung nach vorgegbenen Modellen, wie etwa nach dem bekannten Modell von Walfish und Ikegami. Die Sollwerte geben für die Raumkoordinaten des Planquadrates die Funkausbreitungsbedingungen auf Funkstrecken zu mindestens zwei der Funkfeststationen an, z.B. die Soll-Empfangspegel. Aus den Sollwerten können die räumlichen Entfernungen des Planquadrats zu den mindestens zwei Funkfeststationen abgeleitet werden.

In der Datenbank DB sind folgenden Daten für jedes der Planquadrate gespeichert: Ein Soll-Datensatz DS, der mindestens zwei Sollwerte RL1 bis RL4 enthält, und ein Zählerstand CNT der das Verkehrsaufkommen in diesem Planquadrat angibt. In diesem Beispiel werden als Sollwerte Empfangspegel gespeichert, die in dem betrachteten Planquadrat empfangen werden müßten. Und zwar der Empfangspegel RL1, der von Funksignalen der Funkfeststation BS1 erzeugt wird, der Empfangspegel RL2, der von Funksignalen der Funkfeststation BS2 erzeugt wird usw. Für das Planquadrat C2 sind in der Datenbank DB beispielsweise folgende Sollwerte (Empfangspegel) gespeichert: RL1 = -19 dBm, RL2 = -44 dBm, RL3 = -49 dBm und RL4 = -58 dBm. Die Empfangspegel werden durch die Dämpfungen auf den Funkstrecken gemindert, so daß jeder Empfangpegel einem Maß für die tatsächliche räumliche Entfernung zwischen dem Planquadrat C2 und der jeweiligen Funkfeststation entspricht. Durch den Soll-Datensatz DS ist demnach ein jedes Planquadrat eindeutig bestimmt.

Es wird im weiteren beschrieben, wie nun festgestellt wird, in welchen der Planquadrate sich die Mobilstation befinden, um eine räumliche Verteilung des Verkehrsaufkommens ermitteln zu können.

Für jede Mobilstation, so auch für die in Fig. 1a dargestellte Mobilstation MS, wird anhand des später beschriebenen Verfahrens festgestellt, in welchem Segment (Planquadrat) sich die Mobilstation momentan befindet. Ist das Verfahren für eine Vielzahl der Mobilstationen durchgeführt worden, kann eine Statistik erstellt werden, die angibt, welche Segmente die höchste Dichte an Mobilstationen haben.

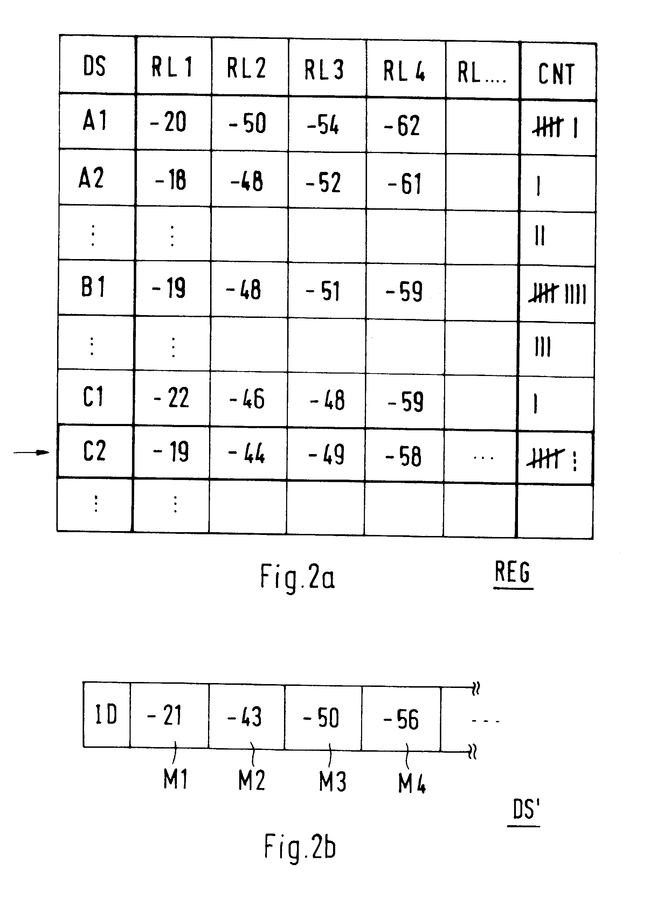

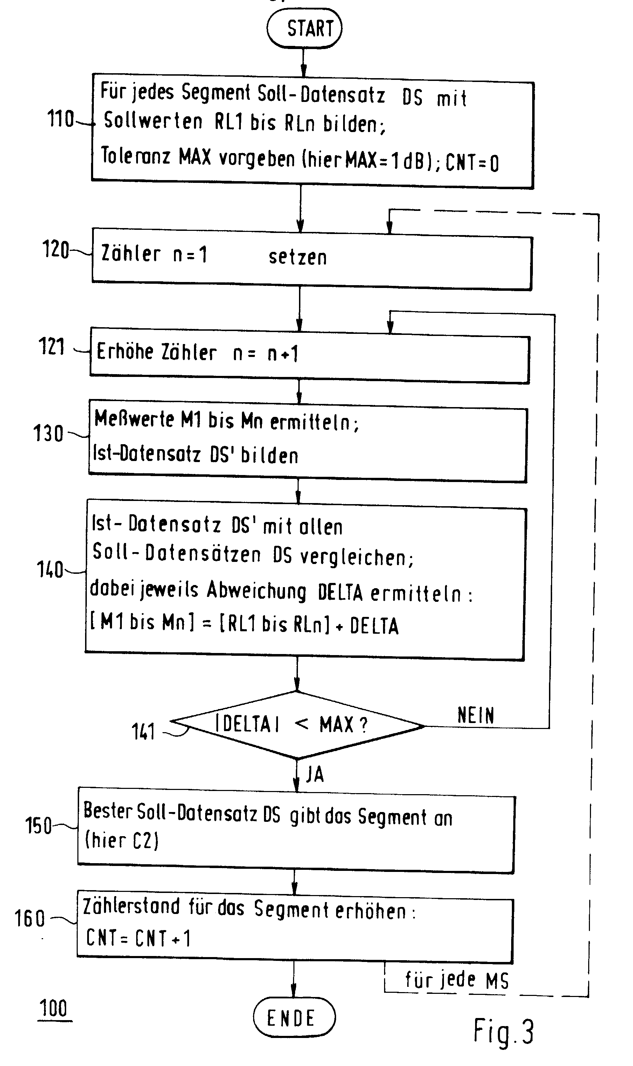

Es wird zunächst ein Ist-Datensatz DS' gebildet, der in Fig. 2b schematisch dargestellt ist. Dieser Ist-Datensatz DS' enthält mindestens zwei Meßwerte M1, M2, M3 und M4, die von den Längen der Funkstrecken zwischen der Mobilstation MS und den Funkfeststationen BS1, BS2,... abhängen. In diesem Beispiel entsprechen die Meßwerte den Empfangspegeln von denjenigen Funksignalen, die die Mobilstation MS momentan auf den verschiedenen Funkstrecken empfängt. Beispielsweise erzeugt die Funkfeststation BS1 am Ort der Mobilstation MS einen Empfangspegel von M1 = -21 dBm. Die Funkfeststation BS2 erzeugt einen Empfangspegel von M2 = -43 dBm und die Funkfeststation BS3 erzeugt einen Empfangspegel von M3 = -50 dBm. Eine weitere nicht dargestellte Funkfeststation erzeugt einen Empfangspegel von M4 = -56 dBm. Diese Empfangspegel M1 bis M4 werden von der Mobilstation MS gemessen und als Meßwerte an die aktuelle Funkfeststation BS1 (serving base station) übertragen. Die Meßwerte werden dann an eine nicht dargestellte Funkfeststationsteuerung im Rahmen eines üblichen Signalisierungsprotokolls (z.B. MAP-Protokoll auf dem Abis-lnterface im GSM-Standard) übertragen. Ein nicht dargestellter Protokoll-Analyser bildet aus den Meßwerten Eingangsdaten für eine mit dem Funknetz verbundene Auswerteeinrichtrung COMP. Die Eingangsdaten mit den Meßwerten M1 bis M4 bilden den in Fig. 2b dargestellten Ist-Datensatze DS', der auch ein Kennfeld ID enthält, in dem die Kennung der Mobilstation eingetragen ist. Anhand eines solchen Ist-Datensatzes kann die Auswerteeinrichtung COMP (siehe Fig. 1a) das im weiteren beschriebene Verfahren nach Fig. 3 für jede Mobilstation durchführen:

In Fig. 3 ist ein Block-Schaltbild für ein Verfahren 100 zum Ermitteln der räumlichen Verteilung des Verkehrsaufkommens innerhalb der in Fig. 1a dargestellten Funkzelle RC1 beispielhaft dargestellt. Das Verfahren wird nun exemplarisch für alle Mobilstationen anhand einer die Auswertung des Ist-Datensatzes DS' beschrieben, der der Mobilstation MS zugeordnet ist. Nach dem Start des Verfahrens 100 wird in einem ersten Schritt für jedes der Segmente (siehe auch Fig. 1 b) ein Soll-Datensatz DS gebildet. Jeder Soll-Datensatz enthält mindestens zwei Sollwerte RL1 bis RLn (n ≥ 2), die mittels des Funknetzplanungstools berechnet wurden und aus denen sich die Entfernungen zwischen der Mobilstation MS und den Funkfeststationen ableiten lassen. Wie schon anhand der Fig. 2a beschrieben, enthält der Soll-Datensatz DS für das Segment C2 die folgenden Sollwerte, die den erwarteten Empfangspegeln entsprechen: RL1 = -19 dBm, RL2 = -44 dBm usw. Es wird der Zählerstand CNT=0 gesetzt. In dem Schritt 110 wird außerdem die Toleranz MAX vorgegeben, die ein Maß ist für die zulässige Abweichung der Istwerte von den Sollwerten. In diesem Beispiel beträgt MAX = 1 dB. In einem nächsten Schritt 120 wird ein Zähler n auf 1 gesetzt. Anschließend wird in einem Schritt 121 der Zähler n um 1 erhöht (n=n+1). Der Zähler n gibt an, wieviele Meßwerte mit den Sollwerten verglichen werden. Zunächst beträgt n = 2.

In einem nächsten Schritt 130 werden die Meßwerte M1 bis Mn (n ≥ = 2) ermittelt und daraus ein Ist-Datensatz DS' gebildet. Für die Mobilstation MS wird ein Ist-Datensatz DS' gebildet, wie in Fig. 2b dargestellt. In diesem Beispiel werden Meßwerte zunächst einzeln von der Mobilstation an das Funknetz zu übertragen und anschließend der Ist-Datensatz DS' innerhalb des mit der Auswerteeinrichtung COMP verbundenen Protokoll-Analysers (nicht dargestellt) gebildet. Es ist auch denkbar, daß der Ist-Datensatz durch die Mobilstation gebildet und anschließend an das Funknetz übertragen wird.

In einem nachfolgenden Schritt 140 wird nun dieser Ist-Datensatz DS' mit allen Soll-Datensätzen DS verglichen. Es soll festgestellt werden, welcher der Soll-Datensätze am besten mit dem Ist-Datensatz übereinstimmt, d.h. welcher der Soll-Datensätze am stärksten mit dem Ist-Datensatz korreliert. Jeder Datensatz bildet ein mehrstelliges Zahlentuppel. Um den Vergleich einfach zu gestalten, umfassen die Tuppel zunächst nur zwei Zahlenwerte, d.h. der Ist-Datensatz DS' enthält die Meßwerte M1 und M2 und die Soll-Datensätze DS enthalten die Sollwerte RL1 und RL2. Hierzu ist der Zähler n zunächst auf n=2 eingestellt. Durch Soll-lst-Vergleich wird festgestellt, wie groß die Istwerte von den Sollwerten abweichen. Die Abweichung DELTA wird ermittelt und in einem weiteren Schritt 141 mit der maximal zulässigen Toleranz MAX verglichen. Ist DELTA größer oder gleich MAX, so wird nochmals bei Schritt 121 begonnen und mit einem erhöhten n gerechnet, d.h. nun mit dreistelligen Tuppeln. Ist der Betrag von DELTA kleiner als die Toleranz MAX, d.h. kleiner als 1 dB so werd en nächsten Schritt 150 der zuletzt verglichene Soll-Datensatz DS angegeben sowie dasjenige Segment angegeben, das diesem Soll-Datensatz DS zugeordnet ist. In diesem Beispiel korrelieren die Meßwerte M1 und M2 am stärksten mit den Sollwerten RL1 und RL2 des Datensatzes DS, der dem Segment C2 zugeordnet ist. Demnach wird angenommen, daß sich die Mobilstation MS in diesem Segment C2 befindet. Dann wird in einem nächsten Schritt 160 der Zählerstand für dieses Segment erhöht (CNT = CNT + 1). Der Zählerstand gibt demnach für dieses Segment C2 an, daß sich in diesem Segment zu den bereits fünf ten Mobilstationen auch zusätzlich noch die Mobilstation MS befindet (vgl. auch Fig. 2a).

Die Schritte 120 bis 160 werden für jede Mobilstation innerhalb der Funkzelle RC1 wiederholt. Nach Ablauf einer vorgegebenen Zeitspanne z.B. nach Ablauf mehrerer Stunden, hat jedes der Segmente Al bis D4 einen bestimmten Zählerstand mit CNT. Wie in Fig. 2a dargestellt, hat das Segment B1 den höchsten Zählerstand mit CNT = 9. Die Segmente Al und C2 haben auch hohe Zählerstände CNT = 5 bzw. 6. Werden alle Zählerstände nach Ablauf der vorgegebenen Zeitspanne abgefragt, so ist sofort feststellbar, in welchem der Segmente eine hohe Verkehrslast herrscht. Die Zählerstände CNT geben demnach die räumliche Verteilung des Verkehrsaufkommens innerhalb der Funkzelle RC1 wieder. Als Standort für die Einrichtung einer neuen Funkfeststation innerhalb der Funkzelle wird dasjenige Segment gewählt, das den höchsten Zählerstand und somit die höchste Verkehrslast hat. In diesem Beispiel ist das Segment B1 mit CNT = 9 besonders geeignet für die Wahl des Standortes einer neuen Funkfeststation.

In dem oben beschriebenen Ausführungsbeispiel werden als Meßwerte und als Sollwerte jeweils Empfangspegel miteinander verglichen. Die Empfangspegel hängen von der Funkfelddämpfung auf den Funkstrecken zwischen der Mobilstation und den Funkfeststationen ab, d.h. die Empfangspegel sind ein Maß für die Entfernung zwischen der Mobilstation und den Funkfeststationen. Anhand dieser Empfangspegel können Raumkoordinaten berechnet werden. Es läßt sich somit feststellen, in welchem der Segmente sich eine Mobilstation befindet. Es ist auch denkbar, anstelle von Empfangspegeln Signallaufzeiten auf den Funkstrecken auszuwerten und miteinander zu vergleichen. Besonders vorteilhaft ist es, sowohl eine Auswertung von Empfangspegeln als auch eine Auswertung von Signallaufzeiten durchzuführen, um eine besonders sichere Berechnung der räumlichen Verteilung des Verkehrsaufkommens zu erzielen. Die Berechnung des Verkehrsaufkommens kann auch dadurch verbessert werden, daß die Anzahl der miteinander verglichenen Meßwerte und Sollwerte erhöht wird, d.h. das nicht nur zwei sondern mehrere Werte jeweils miteinander verglichen werden. Dazu wird iterativ der Zähler n um jeweils 1 erhöht (s. Schritt 121 in Fig. 3).

In dem Ausführungsbeispiel wurde beschrieben, daß die Meßwerte von der jeweiligen Mobilstation ermittelt werden und an die Auswerteeinrichtung COMP übertragen werden. Es ist auch denkbar, die Meßwerte auf Seite des Mobilfunknetzes zu ermitteln, d.h. durch Messungen von Empfangspegeln oder Signallaufzeiten in den Funkfeststationen.

Die in dem Ausführungsbeispiel untersuchte Funkzelle wurde in quadratische Segmente (Planquadrate) aufgeteilt. Diese Maßnahme hat den Vorteil, daß diese Aufteilung der Funkzelle auf ein vorhandenes Funknetzplanungstool zurückgreift, bei dem eine Funkzelle in Planquadrate mit einem Ausmaß von 20 x 20 m aufgeteilt wird. Die Daten für diese Planquadrate können von dem Funknetzplanungstool übernommen werden und in der Datenbank abgespeichert werden. Es ist auch denkbar, andere Segmente zu wählen um die Funkzelle aufzuteilen, beispielsweise wabenförmige Segmente. Die Größe der Segmente wurde hier zu 20 x 20 m gewählt. Werden größere Segmente zur Berechnung des Verkehrsaufkommens herangezogen, so verringert sich die Rechenlast für die Auswerteeinrichtung, jedoch wird durch die Vergrößerung der Segmente auch die Auflösung des Rechenverfahrens verringert. Durch Veränderung der Größe der Segmente kann man eine Optimierung zwischen Rechnerlast und Rechengenauigkeit herbeiführen.

In dem Beispiel ist die Auswerteeinrichtung eine sogenannte Workstation, die mit den Funkfeststationen verbunden ist über eine nicht dargestellte Funkfeststationssteuerung, an die ein Protokoll-Analyzer angeschlossen ist. Die Verwendung eines Protokoll-Analyzers hat den Vorteil, daß die Meßwerte in Form eines Ist-Datensatzes bereitgestellt werden, der unverändert für die Auswertung und den Vergleich mit den Soll-Datensätzen verwendbar ist. Die Auswerteeinrichtung kann anstelle daß sie direkt mit dem Protokoll-Analyzer und der Funkfeststationssteuerung verbunden ist, auch über eine Datenfernverbindung (z.B. über ISDN) mit der Funkfeststationssteuerung oder mit einer Mobilfunkvermittlungsstelle des Funknetzes verbunden werden. Demnach muß die Auswerteeinrichtung nicht unbedingt Bestandteil des Mobilfunknetzes sein.

Die Beschreibung des Ausführungsbeispieles geht von nahezu idealen Funkübertragungsbedingungen aus, d.h. von zum überwiegenden Teil vorherschenden Sichtfunkverbindungen zwischen den Mobilstationen und den Funkfeststationen. Um das beschriebene Verfahren jedoch auch in Situationen anwenden zu können, in denen im allgemeinen keine Sichtfunkverbindung herrschen (z.B. Funkabschattung durch Gebäude) ist es denkbar, die Meßwerte um ein konstanten Pegel zu erhöhen, der in etwa derjenigen Dämpfung entspricht, die bei einer solchen Funkabschattung auftritt. Demnach können die Meßwerte in diesen Fällen durch einen sogenannten "attenuation-offset" korrigiert werden. Dieser offset läßt sich dadurch bestimmen, daß zunächst Laufzeitmessungen durchgeführt werden, aus denen das Segment berechnet wird, in dem sich die Mobilstation aufhalten müßte. Anschließend werden die von der Mobilstation ermittelten Empfangspegel mit Soll-Empfangspegeln verglichen, die innerhalb dieses Segmentes gemessen werden müßten. Durch Vergleich der Ist- und Sollwerte ist der offset bestimmtbar und kann für spätere Berechnungen herangezogen werden.

Im Ausführungsbeispiel wurde das vorgestellte Verfahren zur Berechnung von neuen Standorten verwendet, an denen neue Funkfeststationen zur Entlastung der bereits vorhandenen Funkfeststationen aufgestellt werden sollen. Eine Entlastung ist auch durch Aufstellen von sogenannten Repeatern oder von räumlich abgesetzen Antennen möglich.

## Patentansprüche

1. Verfahren (100) zum Ermitteln der räumlichen Verteilung des Verkehrsaufkommens innerhalb einer Funkzelle (RC1) eines zellularen Mobilfunknetzes (MRN) mit Funkfeststation (BS1, BS2, BS3), die jeweils eine der Funkzellen (RC1, RC2, RC3) versorgen, mit folgenden Schritten:
- die Funkzelle (RC1) wird in mehrere Segmente (A1, A2, A3, ... B1, B2, ...) aufgeteilt, wobei jedem Segment (C2) ein Soll-Datensatz (DS) zugeordnet wird, der mindestens zwei Sollwerte (RL1, RL2) enthält, die für die Raumkoordinaten des Segments (C2) Funkausbreitungsbedingungen auf Funkstrecken zu mindestens zwei der Funkfeststationen (BS1, BS2) angeben und aus denen die räumlichen Entfernungen des Segmentes (C2) zu den mindestens zwei Funkfeststationen (BS1, BS2) ableitbar sind (Schritt 110);
- für jede Mobilstation (MS) innerhalb der Funkzelle (RC1) werden mindestens zwei Meßwerte (M1, M2) ermittelt, die von den Längen der Funkstrecken zwischen der Mobilstation (MS) und den mindestens zwei Funkfeststationen (BS1, BS2) abhängen (Schritt 130);
- aus den Meßwerten (M1, M2) wird ein Ist-Datensatz (DS') gebildet und mit den Soll-Datensätzen (DS), die jeweils genau einem der Segmente (A1, A2, A3, ...B1, B2, ...) zugeordnet sind, verglichen (Schritt 140);
- dasjenige Segment (C2) wird angegeben, dessen Soll-Datensatz (DS) am besten mit dem Ist-Datensatz (DS') übereinstimmt (Schritt 150);
- für das angegebene Segment (C2) wird ein Zählerstand (CNT), der das Verkehrsaufkommen in diesem Segment angibt, erhöht (Schritt 160).

2. Verfahren nach Anspruch 1, bei dem nach Ablauf einer vorgebbaren Zeitspanne die Zählerstände (CNT) für die Segmente (A1, A2, A3, ... B1, B2, ...) miteinander verglichen werden, und daß dasjenige Segment (B1) mit dem höchsten Zählerstand (CNT) angegeben wird als Standort für eine dem Mobilfunknetz (MRN) zusätzlich hinzuzufügende Funkfeststation.

3. Verfahren nach Anspruch 1, bei dem die Meßwerte aus Empfangspegeln (M1, M2) ermittelt werden, die durch die Dämpfung auf den Funkstrecken gemindert werden(Schritt 130).

4. Verfahren nach Anspruch 1, bei dem die Meßwerte aus Laufzeiten von Funksignalen ermittelt werden, die auf den Funkstrecken übertragen werden.

5. Verfahren nach Anspruch 1, bei dem die Meßwerte (M1, M2) von einer jeden Mobilstation (MS) beim Empfang von den Funksignalen, die die Funkfeststationen (BS1, BS2) senden, ermittelt werden und anschließend an diejenige Funkfeststation (BS1) gesendet werden, die die Funkzelle (RC1) versorgt, und daß aus den Meßwerten (M1, M2) Eingangsdaten für eine mit der Funkfeststation (BS1) verbundene Auswerteeinrichtung (COMP) gebildet werden (Schritt 130).

6. Verfahren nach Anspruch 5, bei dem die aus den Meßwerten (M1, M2) gebildeten Eingangsdaten in der Auswerteeinrichtung (COMP) zu dem Ist-Datensatz (DS') zusammengefaßt werden, und bei dem dieser Ist-Datensatz (DS') in der Auswerteeinrichtung (COMP), die auf eine Datenbank (DB) zugreift, mit den Soll-Datensätzen (DS) verglichen wird, deren Sollwerte (RL1, RL2) in der Datenbank (DB) gespeichert sind.

7. Auswerteeinrichtung (COMP) zum Ermitteln der räumlichen Verteilung des Verkehrsaufkommens innerhalb einer Funkzelle (RC1) eines zellularen Mobilfunknetzes (MRN), bei dem die Funkzelle (RC1) in mehrere Segmente (A1, A2, A3, ... B1, B2, ...) aufgeteilt ist, bei dem die Auswerteeinrichtung (COMP) mit Funkfeststation (BS1, BS2, BS3), die jeweils eine der Funkzellen (RC1, RC2, RC3) versorgen, verbunden ist, bei dem die Auswerteeinrichtung (COMP) mit einer Datenbank (DB) verbunden ist, in der Soll-Datensätze (DS) gespeichert sind, von denen jeder genau einem der Segmente (C2) zugeordnet ist und mindestens zwei Sollwerte (RL1, RL2) enthält, die für die Raumkoordinaten des Segments (C2) Funkausbreitungsbedingungen auf Funkstrecken zu mindestens zwei der Funkfeststationen (BS1, BS2) angeben und aus denen die räumlichen Entfernungen des Segmentes (C2) zu den mindestens zwei Funkfeststationen (BS1, BS2) ableitbar sind, bei dem die Auswerteeinrichtung (COMP) für jede Mobilstation (MS) innerhalb der Funkzelle (RC1) aus mindestens zwei Meßwerten (M1, M2), die von den Längen der Funkstrecken zwischen der Mobilstation (MS) und den mindestens zwei Funkfeststationen (BS1, BS2) abhängen, einen Ist-Datensatz (DS') bildet und mit den Soll-Datensätzen (DS) vergleicht, und bei dem die Auswerteeinrichtung (COMP) dasjenige Segment (C2) angibt, dessen Soll-Datensatz (DS) am besten mit dem Ist-Datensatz (DS') übereinstimmt und für dieses Segment (C2) einen Zählerstand (CNT), der das Verkehrsaufkommen in diesem Segment angibt, erhöht.

8. Auswerteeinrichtung (COMP) nach Anspruch 7, die nach Ablauf einer vorgebbaren Zeitspanne die Zählerstände (CNT) für die Segmente (A1, A2, A3, ... B1, B2, ...) miteinander vergleicht, und die dasjenige Segment (B1) mit dem höchsten Zählerstand (CNT) angibt als einen Standort für eine dem Mobilfunknetz (MRN) zusätzlich hinzuzufügende Funkfeststation.

9. Mobilfunknetz (MRN) mit einer Auswerteeinrichtung (COMP) zum Ermitteln der räumlichen Verteilung des Verkehrsaufkommens innerhalb einer Funkzelle (RC1) des zellularen Mobilfunknetzes (MRN), bei dem die Funkzelle (RC1) in mehrere Segmente (A1, A2, A3, ... B1, B2, ...) aufgeteilt ist, bei dem die Auswerteeinrichtung (COMP) mit Funkfeststation (BS1, BS2, BS3), die jeweils eine der Funkzellen (RC1, RC2, RC3) versorgen, verbunden ist, bei dem die Auswerteeinrichtung (COMP) mit einer Datenbank (DB) verbunden ist, in der Soll-Datensätze (DS) gespeichert sind, von denen jeder genau einem der Segmente (C2) zugeordnet ist und mindestens zwei Sollwerte (RL1, RL2) enthält, die für die Raumkoordinaten des Segments (C2) Funkausbreitungsbedingungen auf Funkstrecken zu mindestens zwei der Funkfeststationen (BS1, BS2) angeben und aus denen die räumlichen Entfernungen des Segmentes (C2) zu den mindestens zwei Funkfeststationen (BS1, BS2) ableitbar sind, bei dem die Auswerteeinrichtung (COMP) für jede Mobilstation (MS) innerhalb der Funkzelle (RC1) aus mindestens zwei Meßwerten (M1, M2), die von den Längen der Funkstrecken zwischen der Mobilstation (MS) und den mindestens zwei Funkfeststationen (BS1, BS2) abhängen, einen Ist-Datensatz (DS') bildet und mit den Soll-Datensätzen (DS) vergleicht, und bei dem die Auswerteeinrichtung (COMP) dasjenige Segment (C2) angibt, dessen Soll-Datensatz (DS) am besten mit dem Ist-Datensatz (DS') übereinstimmt und für dieses Segment (C2) einen Zählerstand (CNT), der das Verkehrsaufkommen in diesem Segment angibt, erhöht.

10. Mobilfunknetz (MRN) nach Anspruch 9, bei dem die Auswerteeinrichtung (COMP) nach Ablauf einer vorgebbaren Zeitspanne die Zählerstände (CNT) für die Segmente (A1, A2, A3, ... B1, B2, ...) miteinander vergleicht und dasjenige Segment (B1) mit dem höchsten Zählerstand (CNT) angibt als einen Standort für eine dem Mobilfunknetz (MRN) zusätzlich hinzuzufügende Funkfeststation.
